# EUROPEAN PATENT SPECIFICATION

(11) **EP 4 125 320 B1**
(45) Date of publication and mention of the grant of the patent: **10.09.2025**
(21) Application number: 21721179.6
(22) Date of filing: 29.03.2021
(51) Int. Cl.: A01D 46/26

(54) **SELF-ADAPTING AND HOOK-LOCKING DEVICE FOR BRANCH SHAKERS AND SIMILAR OBJECTS**
SELBSTANPASSENDE UND HAKENVERRIEGELNDE VORRICHTUNG FÜR ASTRÜTTLER UND ÄHNLICHE OBJEKTE
DISPOSITIF AUTO-ADAPTATIF ET À VERROUILLAGE PAR CROCHET POUR SECOUEURS DE BRANCHE ET OBJETS SIMILAIRES

(30) Priority: 27.03.2020 IT 202000006469
(43) Date of publication of application: 08.02.2023
(73) Proprietor: Cifarelli S.p.A., 27058 Voghera (Pavia) (IT)
(72) Inventor: CIFARELLI, Roberto, 27058 Voghera (Pavia) (IT)
(74) Representative: Tarabbia, Luigi
(86) International application number: PCT/IB2021/052566
(87) International publication number: WO 2021/191879

(56) References cited:
- EP-A1- 1 013 160
- WO-A2-2010/032188
- DE-B- 1 237 378
- FR-A1- 2 355 122
- FR-A5- 2 060 845
- US-A- 3 206 919
- US-A- 3 690 052

## Description

The present invention relates to a hook for agricultural tools such as shakers and the like.

As is known, in the harvesting operations of certain fruits (olives, nuts, chestnuts and so on) it may be useful to use one or more portable motorized shakers, which are held by an operator and, by means of a suitable hook connected to a rod placed in alternative movement, are used to shake the branches of the plant itself so as to allow the detachment and fall of the fruits to be harvested.

Generally, the shaker hooks are "C" or "U" shaped, and therefore have an empty space of invariable dimensions, inside which the branch to be shaken is placed.

Alternatively, shaking machines are known that have clamping jaws adapted to tighten around the branches and that are then stressed so as to shake the branch itself.

The known art just described, despite being made in numerous variants, has some drawbacks.

Firstly, traditional hooks are not able to adapt perfectly to any type of branch, since the latter can have an extremely wide range of axial trends and especially transverse sections: it is therefore very likely that a given section of a given hook cannot adapt to branches that are too large or unfavourably oriented, on the contrary, it can contain branches that are too small with excessive relative freedom of movement.

At the same time, shakers equipped with end jaws are too expensive and heavy, and above all are constructed in such a way as to exert excessive strain on the branches, which can therefore suffer considerable damage. Examples of prior art devices are in documents EP1013160, WO2010/032188, US3690052, DE1237378, US3206919 and FR2060845. In the light of the state of the art cited above, the object of the present invention is to provide a shaker hook which is capable of solving the shortcomings just presented. In particular, the present invention aims to devise a hook that can adapt to a wide range of transverse sections of branches, while requiring very few modifications and as quick and simple an intervention as possible. Furthermore, the present invention intends to provide a shaker hook having as little mass as possible, as few constituent parts as possible and a simple, reliable and economical structure. The present invention also intends to create a shaker hook that can ensure maximum gripping stability and branch containment, both in the operating step and in the initial step in which the shaker is approached and engaged to the branch itself. These and other objects are realized by a hook for shakers and similar machines in accordance with the present invention, having the features illustrated in the annexed claims and hereinafter described in a plurality of exemplary, but not limiting, embodiments thereof, as well as in the attached drawings, in which:
- figures 1A-1C show schematic views of a preferred embodiment of a hook in accordance with the present invention in distinct operating configurations;
- figures 2 and 2A show a further embodiment of the hook in accordance with the present invention in distinct operating configurations.

With reference to the attached figures, the hook for shakers and similar machines according to the invention is generally indicated by reference numeral 1 and comprises a main body 2 connectable to a reaction rod 3 of a shaker or similar machine; there is then a main gripping expansion 4, which extends at least partially transversely from said main body 2 and is engageable, under operating conditions, with at least one branch or similar object.

Also in order to capture and keep the branch in the proper position in operating conditions, there is a complementary gripping expansion 5 that defines, in cooperation with the aforementioned main gripping expansion 4, a gripping space "P" adapted to accommodate the branch.

In particular, the main gripping expansion 4 and the complementary gripping expansion 5 are reciprocally movable so as to vary a size of the gripping space "P".

According to an embodiment, the main and complementary gripping expansions 4 and 5 can perform a reciprocal translation movement. It is therefore evident that the dimensions of the gripping space "P" will vary as a function of axial slidings of the main gripping expansion 4 or the complementary gripping expansion 5.

According to a further embodiment, the main and complementary gripping expansions 4 and 5 can be pivoted in such a way as to carry out a reciprocal rotation movement.

Advantageously, the variation in the size of the space "P" translates, at the functional level, into the possibility of adapting the gripping expansions 4 and 5 to the transverse dimension of the branch in a timely manner.

It follows that this hook 1 can have greater operational flexibility in terms of "graspable" dimensions by the hook 1 itself.

According to a further feature of the present invention, the hook 1 can comprise centring means 10 operably activatable in the gripping space "P" for conveying the branch in a stable mechanical interfacing condition with the hook 1: structurally, such centring means 10 can comprise a prismatic head integrally mounted in conjunction with and preferably coincident with the complementary gripping expansion 5 (and/or the main gripping expansion 4, depending on the needs of the moment).

This prismatic head in turn has at least one face and/or one edge, and preferably a pair of faces and/or edges, defining a direction of convergence towards an inner portion of the gripping space "P" and more preferably towards the main body 2 under operating conditions: in this way, when the branch is inserted into the gripping space "P", it finds geometric interfacing zones that tend to always direct it towards the main body 2, thus avoiding the accidental or involuntary escape of the branch from the gripping space "P" itself.

Note that due to their peculiar functional characteristics, the centring means 10 described above can also be mounted on shaker hooks different from the main type of hook 1 described above (and claimed below).

Advantageously, the hook 1 comprises adjustment means 6, configured to move the main gripping expansion 4 and/or the complementary gripping expansion 5 in order to vary the distance between the two expansions and consequently the size of the gripping space "P".

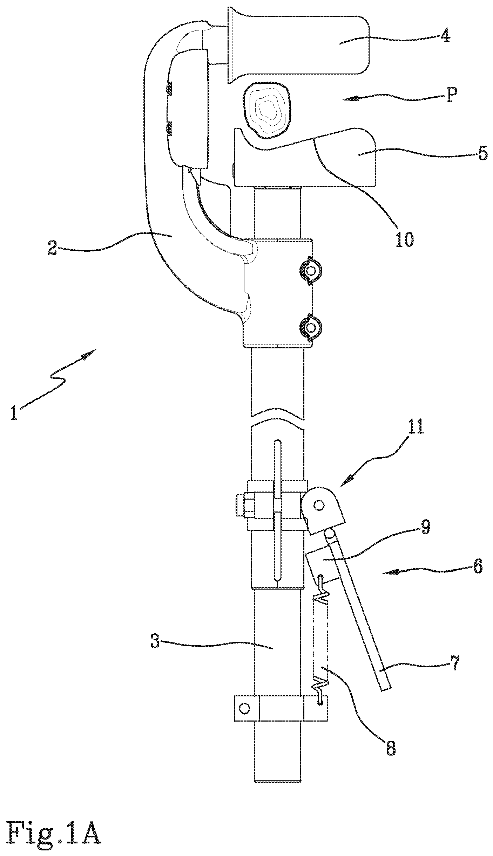

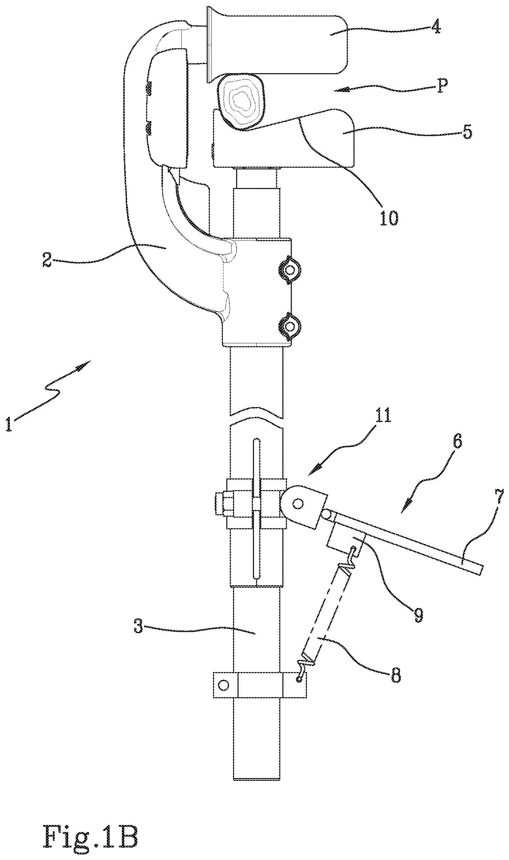

At the functional level, the adjustment means 6 are switchable between a disengagement configuration, illustrated in figure 1A, in which the main and complementary gripping expansions 4 and 5 are in a distanced configuration so as to define a gripping space "P" adapted to disengage said branch or similar object, and an engagement configuration, illustrated in figure 1B, in which the main and complementary gripping expansions 4 and 5 are in an approached configuration so as to retain the branch or similar object.

That is, when the adjustment means 6, directly controlled and manoeuvred by an operator, are switched in the disengagement configuration, the main and complementary gripping expansions 4 and 5 are separated from each other in a configuration suitable for capturing or releasing the branch.

Also, when the adjustment means 6 are switched in the engagement configuration, at least one of the gripping expansions 4 and 5 is approached to the other so as to adapt the size of the gripping space "P" to the transverse dimension of the branch and grasp it, obtaining the approximate configuration of the gripping expansions 4 and 5.

Thus, in the present description, the term "approached configuration" is intended as the configuration in which the reciprocal distance between main and complementary gripping expansions 4 and 5 depends on the transverse dimension of the branch grasped by the hook 1.

This distance does not therefore have a unique and predetermined value.

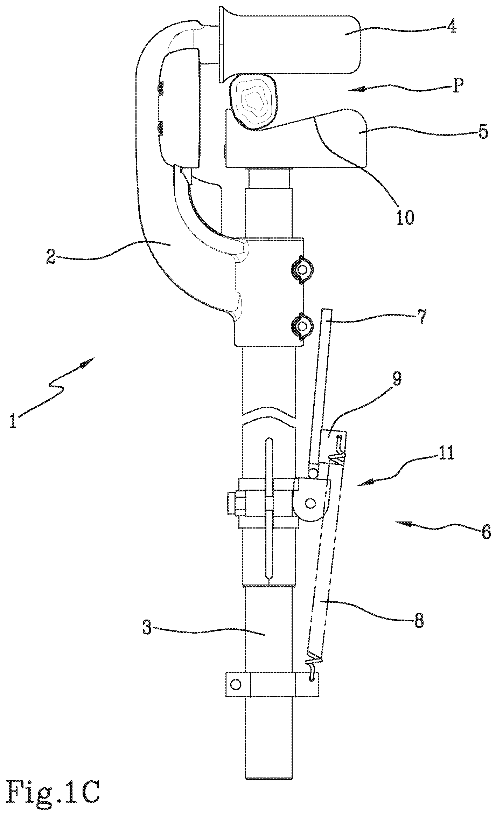

A particular feature of the hook 1, in accordance with the present invention, is that the adjustment means 6 can assume a further configuration, defined "tightened configuration", illustrated in figure 1C.

In this tightened configuration, the adjustment means 6 maintain the main and complementary gripping expansions 4 and 5 stably locked in the approached configuration.

That is, these expansions are "frozen" at the reciprocal distance assumed in the engagement configuration.

Advantageously, such a tightened configuration allows the hook 1 to stably retain the branch.

This feature is considerably useful, for example, during normal shaking operations, improving the vibration exchange between hook 1 and branch and preventing the branch from being disengaged from the main and complementary gripping expansions 4 and 5.

Structurally, the adjustment means 6 can be made in any form, provided that they are adapted to the pursuit of the technical purposes of the invention.

Preferably, the adjustment means 6 comprise a lever 7, tilting between the disengagement configuration and the tightened configuration, and a deformable element 8, preferably elastically, operatively connected to an anchoring portion 9 of the lever 7 so as to move the main gripping expansion 4 and/or the complementary gripping expansion 5 by varying the reciprocal distance between the gripping expansions themselves and, consequently, the size of the gripping space "P".

Advantageously, the lever 7 can be made in the form of a clamping lever 11, preferably in the form of an eccentric cam clamping lever.

According to such an embodiment, the lever 7 has the ability to assume at least two stable equilibrium configurations, preferably corresponding to the respective disengagement and tightened configurations.

It follows that the operator, once the lever 7 has been switched to one among the disengagement and tightened configurations, can release the lever 7 which will maintain this configuration independently.

According to a further embodiment, in the disengagement configuration and in the tightened configuration, the lever 7 is advantageously lying along a line substantially parallel to the reaction rod 3, and preferably, at least partially rested on the hook element 1 to which the lever 7 is hinged.

This structure not only has aesthetic but also functional advantages.

The overall dimensions of this lever 7 are in fact contained, thus limiting, during normal shaking operations, the risk of possible damage and the possibility of becoming entangled.

As for the deformable element 8, it is preferably made in the form of an elastic band.

However, according to alternative embodiments, the deformable element 8 can be made in the form of a traction spring, preferably helical.

Advantageously, the adoption of this deformable element 8 allows the main and complementary gripping expansions 4 and 5 to perfectly adapt to the transverse dimension of the branch.

The deformable element 8 is in fact configured to undergo an elongation directly proportional to the thickness of the branch.

A further advantage provided by the deformable element 8, according to this embodiment, relates to an additional improvement to the stability of the tightened configuration.

During the switching of the adjustment means 6 from the engagement configuration to the tightened configuration, the deformable element 8 will go through a phase of maximum elongation beyond which it will undergo a contraction, stabilizing in the tightened configuration.

It follows that the adjustment means 6 support themselves in a substantially stable tightened configuration and that to move them from the tightened configuration to the disengagement configuration a certain force applied to the lever 7 is necessary.

Furthermore, according to a further aspect of the present invention, the main and complementary gripping expansions 4 and 5 can be connected by an auxiliary elastic element 14 arranged in the gripping space (P), where said auxiliary elastic element 14 has a first end permanently anchored to the main gripping expansion and a second end permanently anchored to the complementary gripping expansion 5.

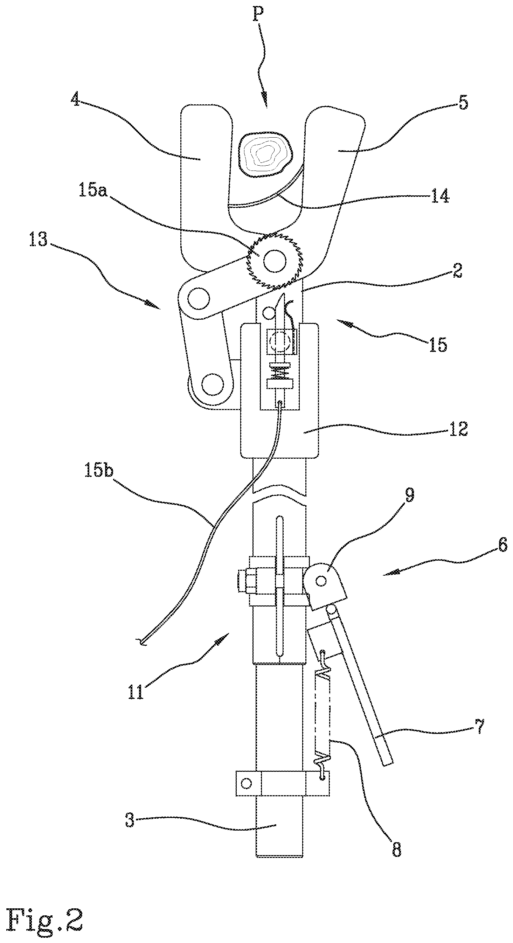

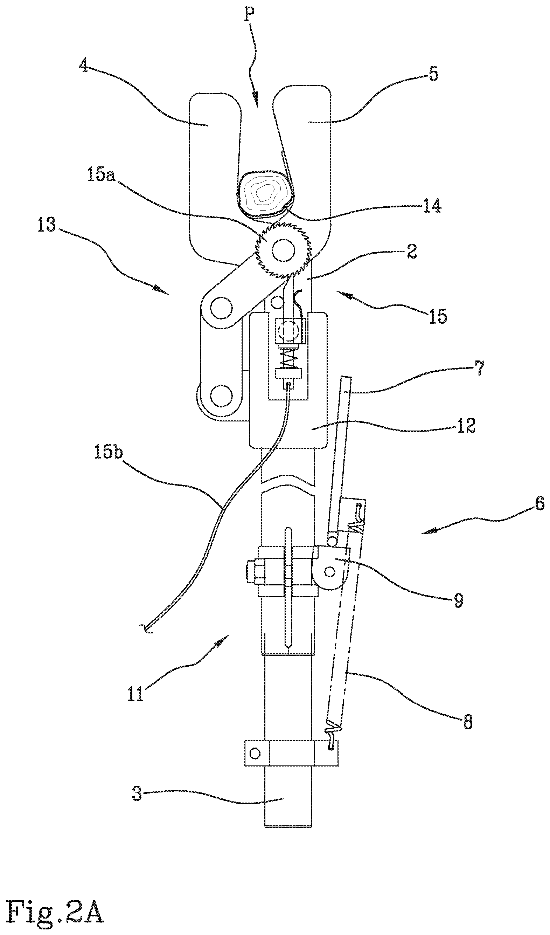

In other words, the hook 1 can comprise an auxiliary elastic element 14, illustrated in figures 2-2A, preferably an elastic band, arranged in the gripping space "P" and configured to support the branch or similar object by operating a partial movement of reciprocal approach of the main and complementary gripping expansions 4 and 5.

Functionally, when a branch or similar object enters the gripping space "P", it intercepts said auxiliary elastic element 14 so that said auxiliary elastic element 14 is at least partially deformed by the branch or similar object and is forced towards an inner portion of the gripping space "P". It follows that the auxiliary elastic element 14 induces the main and complementary gripping expansions 4, 5 to a reciprocal approach.

Advantageously, this auxiliary elastic element 14 improves the operation of the hook 1, in particular it improves the closure of the hook 1 and the grip of the hook itself.

According to a further feature of the present invention, the hook 1 can comprise stabilization means 15 of the approached configuration of the hook 1, configured to stabilize the complementary gripping expansion 5 with respect to the main gripping expansion 4 when the hook 1 assumes the approached configuration, i.e. when, as explained above, the distance between the main and complementary gripping expansion 4 and 5 is adapted by the operator to the diameter or section of the branch or similar object in the gripping space "P".

That is, after the branch or object is inserted inside the gripping space "P", by means of the adjustment means 6 the operator switches the hook 1 from the disengagement configuration to the approached configuration and these stabilization means 15 constrain the main and complementary gripping expansions 4 and 5 to a selective movement.

In the present description, the term "selective movement" is intended as a reciprocal movement of the main and complementary gripping expansions 4 and 5 that occurs only in approach so as to preclude the reciprocal distancing.

These stabilization means 15 are configured to operate autonomously.

Preferably, structurally, these stabilization means 15 can comprise a ratchet selective locking device 15a, so as to operate in finite steps. The width of the steps depends on the toothing of the ratchet selective locking device 15a.

In general, the ratchet selective locking device 15a is structured according to the reciprocal movement of the main and complementary gripping expansions 4 and 5. That is, in combination with the different type of relative movement between the main and complementary gripping expansions 4 and 5, the ratchet selective locking device 15a will have a dedicated structure.

For example, according to one exemplary embodiment in which the gripping expansions 4 and 5 are reciprocally moving in translation, the ratchet selective locking device 15a comprises a rack ratchet.

Further example, according to an exemplary embodiment illustrated in figures 2 and 2A, wherein the gripping expansions 4 and 5 are reciprocally moved in rotation, the ratchet selective locking device 15° comprises a ratchet having a gear wheel, integrally anchored to the complementary gripping expansion 5, and an abutment element provided with a spring, integrally anchored to the main body 2.

Furthermore, these stabilization means 15 comprise an unlocking element 15b configured to disengage the ratchet selective locking device 15a from the gripping expansions 4 and 5.

Structurally, this unlocking element 15b comprises a flexible element, for example a wire cable.

This unlocking element 15b can be activated directly by the operator. Alternatively, this unlocking element 15b can be operatively connected to the adjustment means 6 in such a way as to be cooperative with the adjustment means 6 themselves.

Furthermore, these stabilization means 15 can work in conjunction with the auxiliary elastic element 14 (when provided) so that, when the branch or similar object is introduced into the gripping space "P", it exerts a force on the auxiliary elastic element 14 which causes the main and complementary gripping expansions 4 and 5 to approach, which are automatically stabilized and blocked by the stabilization means 15.

Advantageously, therefore, these stabilization means 15 further improve the performance of the hook 1.

Hereinafter, various embodiments will be analysed by way of non-limiting example.

A first embodiment is shown in figures 1A-1C.

According to this embodiment, the complementary gripping expansion 5 is integral with an end of the reaction rod 3, to which the main body 2 is slidingly engaged.

That is, the main body 2 has a shape at least partially counter-shaped to the reaction rod 3 so as to fit this reaction rod 3.

The adjustment means 6 are active on the main body 2 to move it along the reaction rod 3 approaching/distancing away from/towards the complementary gripping expansion 5 in such a way as to vary the reciprocal distance between the two gripping expansions and therefore the size of the gripping space "P".

To this end, the lever 7 is hinged directly on the main body 2 while the deformable element 8 is operatively connected by a first end to the anchoring portion 9 of the lever 7 and by a second end to the reaction rod 3.

In accordance with this embodiment, the lever 7 is oriented towards the operator when the adjustment means 6 assume the disengagement configuration, while it is oriented towards the gripping expansions when the means assume the tightened configuration.

Preferably, moreover, the main body 2 has a sleeve portion whose longitudinal extension is such as to allow the adjustment means 6, and in particular the lever 7, to be arranged in a position useful for manipulation by the operator.

A further embodiment, not illustrated in the attached figures, differs from the previous one in the arrangement of the adjustment means 6.

In particular, in this embodiment, the lever 7 is integral with the reaction rod 3 while the deformable element 8 is connected to this lever 7 by means of the first end and to the main body 2 by means of the second end.

It follows that, unlike the previous embodiment, the lever 7 is oriented towards the gripping expansions when the adjustment means 6 assume the disengagement configuration, while it is oriented towards the operator when the means assume the tightened configuration.

In accordance with an alternative embodiment not illustrated in the attached figures, falling within the same inventive concept, the main body 2 is integral with or fixed to one end of the reaction rod 3, inside which a secondary body is slidingly housed, at the end of which the complementary gripping expansion 5 is integral or fixed.

In such an embodiment, the adjustment means 6 are active on the complementary gripping expansion 5 to move it approaching/distancing away from/towards the main gripping expansion 4 in order to vary their reciprocal distance and the size of the gripping space "P".

The reaction rod 3 has a recess, preferably a slit, substantially extending in the direction of longitudinal extension, from which the secondary body is accessible.

The lever 7 is hinged to the main body 2 while the deformable element 8 is operatively connected to the anchoring portion 9 of the lever 7 by means of the first end and to a secondary body 12 by means of the second end. A further embodiment differs from the previous one in that the lever 7 is hinged to the secondary body 12 while the deformable element 8 is operatively connected to the anchoring portion 9 of the lever 7 by the first end and to the main body 2 by the second end.

In a further embodiment, illustrated in figures 2 and 2A, the main body 2 is fixed at one end of the reaction rod (3) and the complementary gripping expansion (5) is centred on the main gripping expansion 4.

Furthermore, the complementary gripping expansion 5 is connected to the secondary body 12 slidingly engaged on the reaction rod 3.

The hook 1 in fact comprises a connection element 13, interposed between the complementary gripping expansion 5 and the secondary body 12.

This connection element 13 can be a non-deformable rigid element, such as a connection rod, a non-deformable flexible element, such as a steel cable, or a deformable flexible element, such as an elastic or a spring.

The reaction rod 3 and secondary body 12 are connected by the adjustment means 6.

In this way, the adjustment means 6, when actuated by the operator, are configured to move the secondary body 12 and consequently the complementary gripping expansion 5, which is connected to the secondary body 12 through an auxiliary deformable element 13.

In other words, the adjustment means 6 are active on the complementary gripping expansion 5 in such a way as to vary the gripping space P.

Another object of the present invention is a portable agricultural machine, such as a shaker or the like, which advantageously comprises at least one gripping hook 1 according to that which is described above and/or according to that which is claimed below.

The invention enables the achievement of important advantages.

Firstly, it should be noted that the peculiar construction architecture of the hook 1 illustrated above (and claimed below) allows operating with maximum adaptability on different diameters of branches and/or parts of a tree or plant.

Furthermore, due to the presence of the adjustment means 6, and in particular to the tightened configuration that can be assumed by the same, the hook 1 has a firm and significantly stable grip.

Secondly, it should be noted that the functions of the present hook 1 are guaranteed with a low number of moving parts relatively to each other, and at the same time it should be noted that thanks to the minimization of the number of parts the hook 1 itself has a significantly reduced mass compared to traditional ones: this translates into a better reliability of the hook 1 itself and a greater yield of the shaking action, since the lower mass of the hook 1 (and therefore its lower inertia) allows a quantitatively better transfer of kinetic energy to the branch.

Finally, it should be noted that the present invention allows an extremely versatile hook 1 to be made with low production and sales costs.

Thanks to the structure described above (and claimed below), it is advantageously possible to minimize the mass of the entire hook 1, since in practice the end of the reaction rod 3 simultaneously performs two functions (i.e.: the support of the main body 2 and the mechanical interface with the branch) and consequently it is possible to create a main body 2 with a single gripping expansion (and therefore more compact and lighter).

## Claims

1. A hook (1) and reaction rod (3) assembly for shakers, comprising:
- a main body (2) connected to the reaction rod (3), the reaction rod (3) being suitable for a shaker
- a main gripping expansion (4) extending at least partially transversely from said main body (2) and engageable, under operating conditions, with at least one branch or similar object;
- a complementary gripping expansion (5) defining, in cooperation with said main gripping expansion (4), a gripping space (P) adapted to accommodate said branch or similar object, said main and complementary gripping expansions (4, 5) being reciprocally movable so as to vary said gripping space (P); and
- adjustment means (6), configured to move said main gripping expansion (4) and/or said complementary gripping expansion (5); said adjustment means (6) being switchable between a disengagement configuration, wherein said main (4) and complementary gripping expansions (5) are in a distanced configuration from one another so as to define a gripping space (P) adapted to release said branch or similar object, and an engagement configuration, wherein said gripping expansions are in an approached configuration from one another so as to retain said branch or similar object; and
- said adjustment means (6) comprise a lever (7), configured to tilt between said disengaged configuration and said tightened configuration, and a deformable element (8) operatively connected to an anchoring portion (9) of said lever (7) so as to move said main gripping expansion (4) and/or said complementary gripping expansion (5), said deformable element (8) being preferably elastic; and **characterized in that**:
- said adjustment means (6) are further configured to assume a tightened configuration adapted to maintain said main (4) and complementary gripping expansions (5) stably locked in said approached configuration;
- the complementary gripping expansion (5) is integral with one end of said reaction rod (3); and
- said main body (2) is slidingly engaged on said reaction rod (3), the adjustment means (6) being active on said main body (2) so as to vary said gripping space (P).

2. A hook (1) and reaction rod (3) assembly for shakers, comprising:
- a main body (2) connected to the reaction rod (3), the reaction rod (3) being suitable for a shaker;
- a main gripping expansion (4) extending at least partially transversely from said main body (2) and engageable, under operating conditions, with at least one branch or similar object;
- the main gripping expansion (4) is integral with one end of said reaction rod (3);
- a complementary gripping expansion (5) defining, in cooperation with said main gripping expansion (4), a gripping space (P) adapted to accommodate said branch or similar object, said main and complementary gripping expansions (4, 5) being reciprocally movable so as to vary said gripping space (P); and
- adjustment means (6), configured to move said main gripping expansion (4) and/or said complementary gripping expansion (5); said adjustment means (6) being switchable between a disengagement configuration, wherein said main (4) and complementary gripping expansions (5) are in a distanced configuration from one another so as to define a gripping space (P) adapted to release said branch or similar object, and an engagement configuration, wherein said gripping expansions are in an approached configuration from one another so as to retain said branch or similar object; and
- said adjustment means (6) comprise a lever (7), configured to tilt between said disengaged configuration and said tightened configuration, and a deformable element (8) operatively connected to an anchoring portion (9) of said lever (7) so as to move said main gripping expansion (4) and/or said complementary gripping expansion (5), said deformable element (8) being preferably elastic;
**characterized in that**:
- said adjustment means (6) are further configured to assume a tightened configuration adapted to maintain said main (4) and complementary gripping expansion (5) stably locked in said approached configuration; and
- wherein the main body (2) is integral at one end of said reaction rod (3) and wherein said complementary gripping expansion (5), hinged on said main gripping expansion (4), is connected to a secondary body (12) slidingly engaged on said reaction rod; said hook further comprising a connection element (13), interposed between said complementary gripping expansion (5) and said secondary body (12); the adjustment means (6) being active on the complementary gripping expansion (5) so as to vary said gripping space (P).

3. The hook (1) and reaction rod (3) assembly according to claim 2, wherein the main body (2) is integral with one end of said reaction rod (3) and wherein said complementary gripping expansion (5) is integral with a secondary body (12) slidingly engaged in said reaction rod (3) and in said main body (2); the adjustment means (6) being active on the complementary gripping expansion (5) so as to vary said gripping space (P).

4. The hook (1) and reaction rod (3) assembly according to claim 1, wherein said lever (7) is hinged to the main body (2) and said deformable element (8) is operatively connected to an anchoring portion (9) of the lever (7) and to said reaction rod (3).

5. The hook (1) and reaction rod (3) assembly according to claim 2, wherein said lever (7) is hinged to the main body (2) and said deformable element (8) is operatively connected to an anchoring portion (9) of the lever (7) and to said secondary body.

6. The hook (1) and reaction rod (3) assembly according to claim 1, wherein said lever (7) is hinged to said reaction rod (3) and said deformable element (8) is operatively connected to an anchoring portion (9) of the lever (7) and to said main body (2).

7. The hook (1) and reaction rod (3) assembly according to claim 2, wherein said lever (7) is hinged to said secondary body (12) and said deformable element (8) is operatively connected to an anchoring portion (9) of the lever (7) and to said main body (2).

8. The hook (1) and reaction rod (3) assembly according to any one of the preceding claims, wherein said lever (7) is made in the form of a clamping lever (11), preferably in the form of an eccentric cam clamping lever.

9. The hook (1) and reaction rod (3) assembly according to claim 2, comprising stabilization means (15) of said approached configuration configured to operate a reciprocal selective movement of said main and complementary gripping expansions (4, 5); said stabilization means preferably comprising a ratchet selective locking device (15a), interposed between said main gripping expansion (4) and said complementary gripping expansion (5), and an unlocking element (15b) configured to release said ratchet locking device (15a) from said main and complementary gripping expansions (4, 5).

10. The hook (1) and reaction rod (3) assembly according to claim 2, wherein an auxiliary elastic element (14) is also present, arranged in said gripping space (P), configured to restingly receive said branch or similar object operating a partial movement of reciprocal approach of said main and complementary gripping expansions (4, 5); said auxiliary elastic element (14) having a first end stably anchored to said main gripping expansion (4) and a second end stably anchored to said complementary gripping expansion (5).

11. The hook (1) and reaction rod (3) assembly according to any one of the preceding claims, wherein there are centring means (10) operably activatable in the gripping space (P) for conveying the branch or similar object in a stable mechanical interfacing condition with the hook (1).

12. A portable agricultural machine, such as a shaker or the like, comprising at least one gripping hook (1) and reaction rod (3) assembly according to any one of the preceding claims.

## Patentansprüche

1. Baugruppe aus Haken (1) und Reaktionsstab (3) für Rüttler, umfassend:
- einen Hauptkörper (2), der mit dem Reaktionsstab (3) verbunden ist, wobei der Reaktionsstab (3) für einen Rüttler geeignet ist
- eine Hauptgreifausdehnung (4), die sich zumindest teilweise quer von dem Hauptkörper (2) erstreckt und unter Betriebsbedingungen mit mindestens einem Ast oder einem ähnlichen Objekt in Eingriff gebracht werden kann;
- eine komplementäre Greifausdehnung (5), die im Zusammenwirken mit der Hauptgreifausdehnung (4) einen Greifraum (P) definiert, der angepasst ist, den Ast oder ein ähnliches Objekt aufzunehmen, wobei die Haupt- und die komplementäre Greifausdehnung (4, 5) hin- und herbeweglich sind, um den Greifraum (P) zu verändern; und
- Einstellmittel (6), die dazu konfiguriert sind, die Hauptgreifausdehnung (4) und/oder die komplementäre Greifausdehnung (5) zu bewegen; wobei die Einstellmittel (6) zwischen einer Lösekonfiguration, in der sich die Hauptgreifausdehnung (4) und die komplementäre Greifausdehnung (5) in einer voneinander beabstandeten Konfiguration befinden, um einen Greifraum (P) zu definieren, der dazu angepasst ist, den Ast oder ein ähnliches Objekt freizugeben, und einer Eingriffskonfiguration, in der sich die Greifausdehnungen in einer einander angenäherten Konfiguration befinden, um den Ast oder ein ähnliches Objekt zurückzuhalten, umschaltbar sind; und
- die Einstellmittel (6) umfassen einen Hebel (7), der konfiguriert ist, um zwischen der gelösten Konfiguration und der festgezogenen Konfiguration zu schwenken, und ein verformbares Element (8), das betriebswirksam mit einem Verankerungsabschnitt (9) des Hebels (7) verbunden ist, um die Hauptgreifausdehnung (4) und/oder die komplementäre Greifausdehnung (5) zu bewegen, wobei das verformbare Element (8) vorzugsweise elastisch ist; und
**dadurch gekennzeichnet, dass**:
- die Einstellmittel (6) ferner konfiguriert sind, um eine festgezogene Konfiguration einzunehmen, die angepasst ist, um die Haupt- (4) und komplementäre Greifausdehnung (5) stabil in der angenäherten Konfiguration verriegelt zu halten;
- die komplementäre Greifausdehnung (5) einstückig mit einem Ende der Reaktionsstange (3) ist; und
- der Hauptkörper (2) gleitend auf dem Reaktionsstab (3) in Eingriff steht, wobei die Einstellmittel (6) auf den Hauptkörper (2) einwirken, um den Greifraum (P) zu verändern.

2. Baugruppe aus Haken (1) und Reaktionsstab (3) für Rüttler, umfassend:
- einen Hauptkörper (2), der mit dem Reaktionsstab (3) verbunden ist, wobei der Reaktionsstab (3) für einen Rüttler geeignet ist;
- eine Hauptgreifausdehnung (4), die sich zumindest teilweise quer von dem Hauptkörper (2) erstreckt und unter Betriebsbedingungen mit mindestens einem Ast oder einem ähnlichen Objekt in Eingriff gebracht werden kann;
- die Hauptgreifausdehnung (4) einstückig mit einem Ende des Reaktionsstabs (3) ist;
- eine komplementäre Greifausdehnung (5), die im Zusammenwirken mit der Hauptgreifausdehnung (4) einen Greifraum (P) definiert, der angepasst ist, den Ast oder ein ähnliches Objekt aufzunehmen, wobei die Haupt- und die komplementäre Greifausdehnung (4, 5) hin- und herbeweglich sind, um den Greifraum (P) zu verändern; und
- Einstellmittel (6), die dazu konfiguriert sind, die Hauptgreifausdehnung (4) und/oder die komplementäre Greifausdehnung (5) zu bewegen; wobei die Einstellmittel (6) zwischen einer Lösekonfiguration, in der sich die Hauptgreifausdehnung (4) und die komplementäre Greifausdehnung (5) in einer voneinander beabstandeten Konfiguration befinden, um einen Greifraum (P) zu definieren, der dazu angepasst ist, den Ast oder ein ähnliches Objekt freizugeben, und einer Eingriffskonfiguration, in der sich die Greifausdehnungen in einer einander angenäherten Konfiguration befinden, um den Ast oder ein ähnliches Objekt zurückzuhalten, umschaltbar sind; und
- die Einstellmittel (6) umfassen einen Hebel (7), der konfiguriert ist, um zwischen der gelösten Konfiguration und der festgezogenen Konfiguration zu schwenken, und ein verformbares Element (8), das betriebswirksam mit einem Verankerungsabschnitt (9) des Hebels (7) verbunden ist, um die Hauptgreifausdehnung (4) und/oder die komplementäre Greifausdehnung (5) zu bewegen, wobei das verformbare Element (8) vorzugsweise elastisch ist;
**dadurch gekennzeichnet, dass**:
- die Einstellmittel (6) ferner konfiguriert sind, um eine festgezogene Konfiguration einzunehmen, die angepasst ist, um die Haupt- (4) und komplementäre Greifausdehnung (5) stabil in der angenäherten Konfiguration verriegelt zu halten;
- wobei der Hauptkörper (2) an einem Ende des Reaktionsstabs (3) einstückig ist und wobei die komplementäre Greifausdehnung (5), die an der Hauptgreifausdehnung (4) angelenkt ist, mit einem Sekundärkörper (12) verbunden ist, der gleitend auf dem Reaktionsstab in Eingriff steht; wobei der Haken ferner ein Verbindungselement (13) umfasst, das zwischen der komplementären Greifausdehnung (5) und dem Sekundärkörper (12) angeordnet ist; wobei die Einstellmittel (6) auf die komplementäre Greifausdehnung (5) einwirken, um den Greifraum (P) zu verändern.

3. Baugruppe aus Haken (1) und Reaktionsstab (3) nach Anspruch 2, wobei der Hauptkörper (2) einstückig mit einem Ende des Reaktionsstabs (3) ist und wobei die komplementäre Greifausdehnung (5) einstückig mit einem Sekundärkörper (12) ist, der gleitend in den Reaktionsstab (3) und in den Hauptkörper (2) in Eingriff steht; wobei die Einstellmittel (6) auf die komplementäre Greifausdehnung (5) einwirken, um den Greifraum (P) zu verändern.

4. Baugruppe aus Haken (1) und Reaktionsstab (3) nach Anspruch 1, wobei der Hebel (7) am Hauptkörper (2) angelenkt ist und das verformbare Element (8) mit einem Verankerungsabschnitt (9) des Hebels (7) und mit dem Reaktionsstab (3) betriebswirksam verbunden ist.

5. Baugruppe aus Haken (1) und Reaktionsstab (3) nach Anspruch 2, wobei der Hebel (7) am Hauptkörper (2) angelenkt ist und das verformbare Element (8) mit einem Verankerungsabschnitt (9) des Hebels (7) und mit dem Sekundärkörper betriebswirksam verbunden ist.

6. Baugruppe aus Haken (1) und Reaktionsstab (3) nach Anspruch 1, wobei der Hebel (7) am Reaktionsstab (3) angelenkt ist und das verformbare Element (8) mit einem Verankerungsabschnitt (9) des Hebels (7) und mit dem Hauptkörper (2) betriebswirksam verbunden ist.

7. Baugruppe aus Haken (1) und Reaktionsstab (3) nach Anspruch 2, wobei der Hebel (7) am Sekundärkörper (12) angelenkt ist und das verformbare Element (8) mit einem Verankerungsabschnitt (9) des Hebels (7) und mit dem Hauptkörper (2) betriebswirksam verbunden ist.

8. Baugruppe aus Haken (1) und Reaktionsstab (3) nach einem der vorhergehenden Ansprüche, wobei der Hebel (7) in Form eines Klemmhebels (11), vorzugsweise in Form eines Exzenter-Klemmhebels, ausgebildet ist.

9. Baugruppe aus Haken (1) und Reaktionsstab (3) nach Anspruch 2, die Stabilisierungsmittel (15) der angenäherten Konfiguration umfasst, die so konfiguriert sind, dass sie eine selektive Hin- und Herbewegung der Haupt- und komplementären Greifausdehnung (4, 5) betreiben; wobei die Stabilisierungsmittel vorzugsweise eine selektive Sperrklinkenverriegelungsvorrichtung (15a) umfassen, die zwischen der Hauptgreifausdehnung (4) und der komplementären Greifausdehnung (5) angeordnet ist, und ein Entriegelungselement (15b) umfassen, das konfiguriert ist, um die Sperrklinkenverriegelungsvorrichtung (15a) von der Haupt- und komplementären Greifausdehnung (4, 5) zu lösen.

10. Baugruppe aus Haken (1) und Reaktionsstab (3) nach Anspruch 2, wobei auch ein elastisches Hilfselement (14) vorhanden ist, das in dem Greifraum (P) angeordnet ist und dazu konfiguriert ist, den Ast oder ein ähnliches Objekt, der eine teilweise Hin- und Herbewegung der Haupt- und komplementären Greifausdehnung (4, 5) betreibt, ruhend aufzunehmen; wobei das elastische Hilfselement (14) ein erstes Ende, das stabil an der Hauptgreifausdehnung (4) verankert ist, und ein zweites Ende, das stabil an der komplementären Greifausdehnung (5) verankert ist, aufweist.

11. Baugruppe aus Haken (1) und Reaktionsstab (3) nach einem der vorhergehenden Ansprüche, wobei Zentriermittel (10) vorhanden sind, die in dem Greifraum (P) betriebswirksam aktivierbar sind, um den Ast oder ein ähnliches Objekt in einem stabilen mechanischen Verbindungszustand mit dem Haken (1) zu befördern.

12. Tragbare landwirtschaftliche Maschine, wie etwa ein Rüttler oder dergleichen, umfassend mindestens eine Baugruppe aus Greifhaken (1) und Reaktionsstab (3) nach einem der vorhergehenden Ansprüche.

## Revendications

1. Ensemble crochet (1) et tige de réaction (3) pour secoueurs, comprenant :
- un corps principal (2) relié à la barre de réaction (3), la barre de réaction (3) étant adaptée à un secoueur
- une extension de préhension principale (4) s'étendant au moins partiellement transversalement à partir dudit corps principal (2) et pouvant être engagée, dans des conditions de fonctionnement, avec au moins une branche ou un objet similaire ;
- une extension de préhension complémentaire (5) définissant, en coopération avec ladite extension de préhension principale (4), un espace de préhension (P) adapté pour accueillir ladite branche ou ledit objet similaire, lesdites extensions de préhension principale et complémentaire (4, 5) étant mobiles réciproquement de manière à faire varier ledit espace de préhension (P) ; et
- des moyens de réglage (6), configurés pour déplacer ladite extension de préhension principale (4) et/ou ladite extension de préhension complémentaire (5) ; lesdits moyens de réglage (6) pouvant être commutés entre une configuration de désengagement, dans lequel lesdites extensions de préhension principale (4) et complémentaire (5) sont dans une configuration éloignée l'une de l'autre de manière à définir un espace de préhension (P) adapté pour libérer ladite branche ou ledit objet similaire, et une configuration d'engagement, dans lequel lesdites extensions de préhension sont dans une configuration rapprochée l'une de l'autre de manière à retenir ladite branche ou ledit objet similaire ; et
- lesdits moyens de réglage (6) comprennent un levier (7), configuré pour basculer entre ladite configuration désengagée et ladite configuration serrée, et un élément déformable (8) relié de manière opérationnelle à une partie d'ancrage (9) dudit levier (7) de manière à déplacer ladite extension de préhension principale (4) et/ou ladite extension de préhension complémentaire (5), ledit élément déformable (8) étant de préférence élastique ; et
**caractérisé en ce que** :
- lesdits moyens de réglage (6) sont en outre configurés pour prendre une configuration serrée adaptée pour maintenir lesdites extensions de préhension principale (4) et complémentaire (5) verrouillées de manière stable dans ladite configuration rapprochée ;
- l'extension de préhension complémentaire (5) est solidaire d'une extrémité de ladite tige de réaction (3) ; et
- ledit corps principal (2) est engagé de manière coulissante sur ladite tige de réaction (3), les moyens de réglage (6) étant actifs sur ledit corps principal (2) de manière à faire varier ledit espace de préhension (P).

2. Ensemble crochet (1) et tige de réaction (3) pour secoueurs, comprenant :
- un corps principal (2) relié à la barre de réaction (3), la barre de réaction (3) étant adaptée à un secoueur ;
- une extension de préhension principale (4) s'étendant au moins partiellement transversalement à partir dudit corps principal (2) et pouvant être engagée, dans des conditions de fonctionnement, avec au moins une branche ou un objet similaire ;
- l'extension de préhension principale (4) est solidaire d'une extrémité de ladite tige de réaction (3) ;
- une extension de préhension complémentaire (5) définissant, en coopération avec ladite extension de préhension principale (4), un espace de préhension (P) adapté pour accueillir ladite branche ou ledit objet similaire, lesdites extensions de préhension principale et complémentaire (4, 5) étant mobiles réciproquement de manière à faire varier ledit espace de préhension (P) ; et
- des moyens de réglage (6), configurés pour déplacer ladite extension de préhension principale (4) et/ou ladite extension de préhension complémentaire (5) ; lesdits moyens de réglage (6) pouvant être commutés entre une configuration de désengagement, dans lequel lesdites extensions de préhension principale (4) et complémentaire (5) sont dans une configuration éloignée l'une de l'autre de manière à définir un espace de préhension (P) adapté pour libérer ladite branche ou ledit objet similaire, et une configuration d'engagement, dans lequel lesdites extensions de préhension sont dans une configuration rapprochée l'une de l'autre de manière à retenir ladite branche ou ledit objet similaire ; et
- lesdits moyens de réglage (6) comprennent un levier (7), configuré pour basculer entre ladite configuration désengagée et ladite configuration serrée, et un élément déformable (8) relié de manière opérationnelle à une partie d'ancrage (9) dudit levier (7) de manière à déplacer ladite extension de préhension principale (4) et/ou ladite extension de préhension complémentaire (5), ledit élément déformable (8) étant de préférence élastique ;
**caractérisé en ce que** :
- lesdits moyens de réglage (6) sont en outre configurés pour prendre une configuration serrée adaptée pour maintenir lesdites extensions de préhension principale (4) et complémentaire (5) verrouillées de manière stable dans ladite configuration rapprochée ; et
- dans lequel le corps principal (2) est solidaire à une extrémité de ladite tige de réaction (3) et dans lequel ladite extension de préhension complémentaire (5), articulée sur ladite extension de préhension principale (4), est reliée à un corps secondaire (12) engagé de manière coulissante sur ladite tige de réaction ; ledit crochet comprend en outre un élément de liaison (13), interposé entre ladite extension de préhension complémentaire (5) et ledit corps secondaire (12) ; les moyens de réglage (6) sont actifs sur l'extension de préhension complémentaire (5) de manière à faire varier ledit espace de préhension (P).

3. Ensemble crochet (1) et tige de réaction (3) selon la revendication 2, dans lequel le corps principal (2) est solidaire d'une extrémité de ladite tige de réaction (3) et dans lequel ladite extension de préhension complémentaire (5) est solidaire d'un corps secondaire (12) engagé de manière coulissante dans ladite tige de réaction (3) et dans ledit corps principal (2) ; les moyens de réglage (6) étant actifs sur l'extension de préhension complémentaire (5) de manière à faire varier ledit espace de préhension (P).

4. Ensemble crochet (1) et tige de réaction (3) selon la revendication 1, dans lequel ledit levier (7) est articulé au corps principal (2) et ledit élément déformable (8) est relié de manière opérationnelle à une partie d'ancrage (9) du levier (7) et à ladite tige de réaction (3).

5. Ensemble crochet (1) et tige de réaction (3) selon la revendication 2, dans lequel ledit levier (7) est articulé au corps principal (2) et ledit élément déformable (8) est relié de manière opérationnelle à une partie d'ancrage (9) du levier (7) et audit corps secondaire.

6. Ensemble crochet (1) et tige de réaction (3) selon la revendication 1, dans lequel ledit levier (7) est articulé à ladite tige de réaction (3) et ledit élément déformable (8) est relié de manière opérationnelle à une partie d'ancrage (9) du levier (7) et audit corps principal (2).

7. Ensemble crochet (1) et tige de réaction (3) selon la revendication 2, dans lequel ledit levier (7) est articulé sur ledit corps secondaire (12) et ledit élément déformable (8) est relié de manière opérationnelle à une partie d'ancrage (9) du levier (7) et audit corps principal (2).

8. Ensemble crochet (1) et tige de réaction (3) selon l'une quelconque des revendications précédentes, dans lequel ledit levier (7) est réalisé sous la forme d'un levier de serrage (11), de préférence sous la forme d'un levier de serrage à came excentrique.

9. Ensemble crochet (1) et tige de réaction (3) selon la revendication 2, comprenant des moyens de stabilisation (15) de ladite configuration rapprochée, configurés pour actionner un mouvement sélectif réciproque desdites extensions de préhension principale et complémentaire (4, 5) ; lesdits moyens de stabilisation comprenant de préférence un dispositif de verrouillage sélectif à cliquet (15a), interposé entre ladite extension de préhension principale (4) et ladite extension de préhension complémentaire (5), et un élément de déverrouillage (15b) configuré pour libérer ledit dispositif de verrouillage à cliquet (15a) desdites extensions de préhension principale et complémentaire (4, 5).

10. Ensemble crochet (1) et tige de réaction (3) selon la revendication 2, dans lequel un élément élastique auxiliaire (14) est également présent, disposé dans ledit espace de préhension (P), configuré pour recevoir au repos ladite branche ou ledit objet similaire en activant un mouvement partiel de rapprochement réciproque desdites extensions de préhension principale et complémentaire (4, 5) ; ledit élément élastique auxiliaire (14) ayant une première extrémité ancrée de manière stable à ladite extension de préhension principale (4) et une seconde extrémité ancrée de manière stable à ladite extension de préhension complémentaire (5).

11. Ensemble crochet (1) et tige de réaction (3) selon l'une quelconque des revendications précédentes, dans lequel sont présents des moyens de centrage (10) pouvant être activés dans l'espace de préhension (P) pour transporter la branche ou l'objet similaire dans une condition d'interface mécanique stable avec le crochet (1).

12. Machine agricole portative, telle qu'un secoueur ou similaire, comprenant au moins un ensemble crochet de préhension (1) et tige de réaction (3) selon l'une quelconque des revendications précédentes.
